# EUROPÄISCHE PATENTSCHRIFT

(11) **EP 1 794 009 B1**
(45) Veröffentlichungstag und Bekanntmachung des Hinweises auf die Patenterteilung: **27.08.2008**
(21) Anmeldenummer: 05792357.5
(22) Anmeldetag: 28.09.2005
(51) Int. Cl.: B60G 21/055

(54) **SCHALTBARER STABILISATOR FÜR EIN KRAFTFAHRZEUG**
SWITCHABLE STABILISER FOR A MOTOR VEHICLE
STABILISATEUR COMMUTABLE DESTINE A UN VEHICULE

(30) Priorität: 30.09.2004 DE 102004048085
(43) Veröffentlichungstag der Anmeldung: 13.06.2007
(73) Patentinhaber: ZF FRIEDRICHSHAFEN Aktiengesellschaft, 88038 Friedrichshafen (DE)
(72) Erfinder: VORTMEYER, Jens, 32361 Preussisch Oldendorf (DE); HARTMANN, Andreas, 49685 Höltinghausen (DE); GRANNEMANN, Bernd, 32479 Hille (DE); ZANELLA, Mauro, 88048 Friedrichshafen (DE); BEETZ, Stefan, 19089 Barnin (DE); BAUSTIAN, Torsten, 19089 Crivitz (DE); FESTNER, Gerald, 19288 Klein Krams (DE)
(86) Internationale Anmeldenummer: PCT/DE2005/001724
(87) Internationale Veröffentlichungsnummer: WO 2006/034698

(56) Entgegenhaltungen:
- EP-A- 1 057 667
- DE-C1- 19 923 100

## Beschreibung

Die Erfindung bezieht sich auf schaltbare Stabilisatoren nach dem Oberbegriff des Anspruch 1. Solche Stabilisatoren werden in der Fahrzeugtechnik eingesetzt.

Grundsätzlich ist jeder Achse eines Kraftfahrzeuges ein Stabilisator zugeordnet, der nach dem Drehstabprinzip arbeitet und der parallel zur Fahrzeugachse angeordnet und an beiden Enden an einer Radaufhängung befestigt ist. Dieser Stabilisator verhindert bzw. schwächt die Übertragung der von den Fahrbahnverhältnissen verursachten und von den Rädern ausgehenden Wankbewegungen auf den Fahrzeugaufbau wesentlich ab. Solche Wankbewegungen treten insbesondere in Fahrbahnkurven oder bei unebenen Fahrbahnverhältnissen auf.

Einteilige Stabilisatoren sind in ihrer Dimensionierung und in ihrer Materialbeschaffenheit auf eine vorbestimmte Federrate ausgelegt, sodass sie Torsionskräfte nur in einer bestimmten Größenordnung aufnehmen und entsprechende Gegenkräfte aufbringen können. Damit reagieren sie aber auf unterschiedliche Belastungen entweder zu weich oder zu hart, was sich nachteilig auf den Fahrkomfort auswirkt. Einteilige Stabilisatoren eignen sich daher sehr gut für den Einsatz auf der Straße. Dagegen sind sie wegen der höheren Torsionsbelastungen in Fahrzeugen, die für das Gelände konzipiert sind, nicht geeignet.

Bei größeren Torsionsbelastungen, wie sie beispielsweise bei solchen Fahrten im Gelände auftreten und wo der begrenzte Verdrehwinkel eines einteiligen Stabilisators nicht mehr ausreicht, werden daher zweigeteilte Stabilisatoren eingesetzt, die über eine schaltbare Kupplung miteinander verbunden sind.

Eine solche schaltbare Kupplung wird in der DE 199 23 100 C1 beschrieben. Diese schaltbare Kupplung besteht aus einem äußeren Drehteil und aus einem inneren Drehteil, die jeweils einerseits mit dem einen Stabilisatorteil und andererseits mit dem anderen Stabilisatorteil starr verbunden sind. Dabei sind das äußere Drehteil und das innere Drehteil jeweils mit zwei gegenüberliegenden Verzahnungselementen ausgerüstet, die auf einer gemeinsamen radialen Ebene angeordnet sind und die zwischen sich zwei gegenüberliegende Freiräume ausbilden. In der Kupplung ist weiterhin ein axial verschiebbarer Verriegelungskolben gefiihrt, der stirnseitig in die Zwischenräume der Verzahnungselemente passende Verriegelungselemente besitzt und der in Verriegelungsrichtung von einer Druckfeder und in Entriegelungsrichtung von einem hydraulischen Druck belastet wird. Zum Aufbau des erforderlichen hydraulischen Drucks ist eine entsprechende hydraulische Anlage vorgesehen, die in der Hauptsache aus einer Pumpe, einem schaltbaren Wegeventil, einem Tank und einem Druckspeicher besteht und die als eine Kompakteinheit ausgeführt ist. Diese hydraulische Kompakteinheit ist in einem feuchtigkeitsgeschützten Raum des Fahrzeuges angeordnet und über Freileitungen mit der Kupplung des zweiteiligen Stabilisators verbunden.

Für die Fahrt z.B. auf der Straße ist der hydraulische Druck in der hydraulischen Kupplung abgeschaltet, sodass sich der Verriegelungskolben unter der Kraft der Druckfeder verschiebt und die Freiräume zwischen den Verzahnungselementen der beiden Drehteile mit seinen Verriegelungselementen spielfrei ausfüllt. Damit sind beide Stabilisatorteile drehfest miteinander verbunden und so verhalten sich die beiden Stabilisatorteile in dieser Stellung wie ein einteiliger Stabilisator. Für die Fahrt z.B. im Gelände wird der Vernegelungskolben von einem hydraulischen Druck belastet, der den Verriegelungskolben entgegen der Kraft der Druckfeder verschiebt und so die Verriegelungselemente und die radialen Verzahnungselemente öffnet. In dieser Offenstellung sind das äußere Drehteil und das innere Drehteil und damit beide Stabilisatorteile über einen begrenzten Verdrehwinkel zu einander drehbar.

Dieser schaltbare Stabilisator erfüllt alle notwendigen technischen Anforderungen. Nachteile treten jedoch im Bereich der Herstellung und Wartung auf. So müssen die beiden Stabilisatorteile, die elektrischen Steuerteile und die Hydraulikkomponenten separat hergestellt und dann auf einem Montageband komplettiert und in das Fahrzeug eingebaut werden. Die erforderliche System- und Funktionsprüfung erfolgt dann im eingebauten Zustand. Bei einer möglichen Fehlerfeststellung muss das defekte Bauteil wieder aus dem Fahrzeug ausgebaut und durch ein neues Bauteil ersetzt werden.

Der Erfindung liegt die Aufgabe zugrunde, einen schaltbaren Stabilisator derart auszubilden, dass die komplette Funktionalität, sowohl mechanisch, als auch antriebs- und steuerungsseitig vor dem Einbau nachweisbar bzw. durchführbar ist, wobei ein geringer Bauraum für den Stabilisator einzuhalten ist.

Diese Aufgabe wird durch einen schaltbaren Stabilisator mit den Merkmalen des Anspruchs 1 gelöst. Zweckdienliche Ausgestaltungen ergeben sich aus den Unteransprüchen 2 bis 6.

Erfindungsgemäß bildet bei einem gattungsgemäß ausgebildeten schaltbaren Stabilisator gemäß Anspruch 1 die Hydraulikanlage des Hydraulik- und Steuerteils mit der Kolbenzylindereinheit der schaltbaren Kupplungseinheit einen geschlossenen Kreislauf. Weiterhin ist bei dem gattungsgemäß ausgebildeten schaltbaren Stabilisator gemäß Anspruch 1 das Hydraulik- und Steuerteil in das zylindrische Gehäuse der schaltbaren Kupplung integriert. Dabei liegt der besondere Vorteil dieser Lösungen darin, dass mit der Einführung einer Hydraulikanlage mit einem geschlossenen Hydraulikkreislauf die Notwendigkeit entfällt, die Hydraulikanlage an einem gegen Feuchtigkeit geschützten Ort zu platzieren, da durch die gewählte, integrierte Anordnung bedingt die Hydraulikanlage verständlicherweise einen Schutz vor Feuchtigkeit erhält. Geschlossene Hydraulikkreisläufe haben keine Verbindung mit der Atmosphäre und so kann die Hydraulikanlage auch im Unterbodenbereich des Fahrzeuges angeordnet werden. Das ermöglicht, den zweiteiligen Stabilisator mit seiner schaltbaren Kupplung und mit der Hydraulikanlage als eine kompakte Baueinheit auszuführen. Das bringt erhebliche Kostenvorteile im Bereich der Herstellung und der Systemprüfung, weil das kompakte Gerät separat bearbeitet und vor dem Einbau auf Funktion bzw. Funktionssicherheit geprüft werden kann.

Kostenersparnisse treten auch dadurch ein, dass auf die sonst erforderlichen Hydraulikleitungen von der Hydraulikanlage zum Stabilisator verzichtet werden kann.

An den Fahrzeugen werden auch Einbauräume dort eingespart, wo sich sonst die Hydraulikleitungen befanden und wo der Hydraulik- und Steuerteil platziert war. Es entfällt auch die Notwendigkeit, den Einbauraum für das Hydraulik- und Steuerteil auch an solchen Fahrzeugen freizuhalten, für die gar kein schaltbarer Stabilisator vorgesehen war.

In zweckmäßiger Ausgestaltung eines Stabilisators gemäß Anspruch 1 ist das Hydraulik-und Steuerteil über eine Druckleitung mit dem Kupplungsdruckraum der schaltbaren Kupplung und über eine Saugrohrleitung mit dem Kupplungsfederraum der schaltbaren Kupplung verbunden. Weiterhin sind die Druckleitung mit einem elektrischen Druckschalter und die Saugleitung mit einem Druckspeicher verbunden und die Druckleitung und die Saugleitung stehen über eine Überbrückungsleitung in Verbindung, wobei in der Überbrückungsleitung ein elektromagnetisch schaltbares 2/2-Wegeventil angeordnet ist, das in der bestromten Stellung geschlossen und in der nichtbestromten Stellung offen ausgeführt ist.

Gemäß einer zweckmäßigen Weiterbildung eines Stabilisators ist das Hydraulik- und Steuerteil koaxial zur schaltbaren Kupplung ausgerichtet und besteht aus einem zylindrischen Gehäuse und einem im zylindrischen Gehäuse angeordneten Ventilblock, wobei das zylindrische Gehäuse des Hydraulik- und Steuerteils mit dem zylindrischen Gehäuse der schaltbaren Kupplung drehfest verbunden und der Ventilblock mit allen erforderlichen Hydraulikelementen verkettet ist.

Zur drehfesten Verbindung der beiden zylindrischen Gehäuse und zur Erhöhung der Stabilität der Baueinheit kommt dabei bevorzugt ein Zwischenflansch zum Einsatz. Außerdem bietet ein Zwischenflansch sehr gute Bedingungen zum Einbau eines Druckspeichers.

In einer bevorzugten Ausführung eines solchen Stabilisators ist das Hydraulik- und Steuerteil über eine interne Druckleitung mit dem Kupplungsdruckraum der schaltbaren Kupplung und über eine externe Saugrohrleitung mit dem Kupplungsfederraum der schaltbaren Kupplung verbunden. Weiterhin sind die Druckleitung mit einem elektrischen Druckschalter und die Saugleitung mit einem Druckspeicher verbunden und die Druckleitung und die Saugleitung stehen über eine Überbrückungsleitung in Verbindung, wobei in der Überbrückungsleitung ein elektromagnetisch schaltbares 2/2-Wegeventil angeordnet ist, das in der bestromten Stellung geschlossen und in der nichtbestromten Stellung offen ausgeführt ist.

Weiterhin können der Druckspeicher als eine einfach wirkende Kolben-Zylindereinheit mit einem Speicherzylinder , einem Speicherkolben und einer den Speicherkolben belastenden Speicherdruckfeder ausgeführt und der Speicherzylinder und der Speicherkolben im Zwischenflansch und die Speicherdruckfeder mit ihrem Speicherfederraum im ersten Stabilisatorteil angeordnet sein. Dabei ist es sehr vorteilhaft, den Druckspeicher als eine einfach wirkende Kolben-Zylindereinheit auszuführen, weil damit der radiale Einbauraum gering gehalten werden kann.

Generell ist es von Vorteil, wenn das Hydraulik- und Steuerteil koaxial zum Mechanikteil der schaltbaren Kupplung ausgerichtet ist, weil damit der für die Verdrehbewegung erforderliche radiale Freiraum am Fahrzeug gering gehalten werden kann. Dabei wird mit der Ausführung eines verkettungsfähigen Ventilblocks nur ein sehr geringer Einbauraum sowohl in radialer als auch in axialer Richtung benötigt.

Die Erfindung soll anhand eines Ausführungsbeispieles näher erläutert werden.
Dazu zeigen:
- Fig. 1: eine Ansicht eines zweiteiligen und schaltbaren Stabilisators,
- Fig. 2: eine Schnittdarstellung der schaltbaren Kupplung des Stabilisators und
- Fig. 3: eine zweite, um 90° gedrehte zweite Schnittdarstellung der schaltbaren Kupplung.

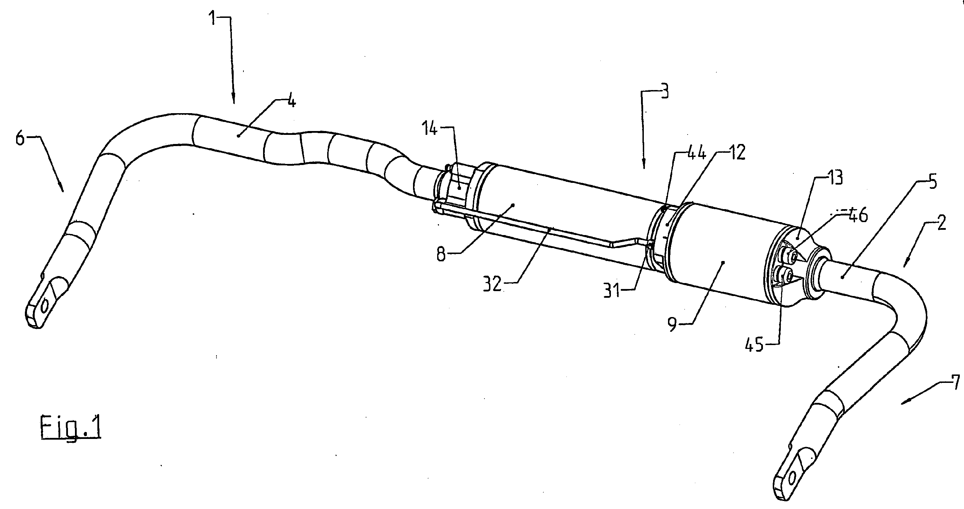

Nach der Fig. 1 besteht der schaltbare Stabilisator aus einem ersten Stabilisatorteil 1 und einem zweiten Stabilisatorteil 2, die beide durch eine schaltbare Kupplung 3 miteinander verbunden sind. Beide Stabilisatorteile 1, 2 sind jeweils über ein Stabilisatorlager 4, 5 am Fahrzeugaufbau und über eine Pendelstütze 6, 7 an den Rädern des Fahrzeugs angeschlagen. Die schaltbare Kupplung 3 besteht aus einem Mechanikteil 8 und einem Hydraulik- und Steuerteil 9, wobei das Mechanikteil 8 beide Stabilisatorteile 1, 2 in einer Endstellung miteinander verbindet und in der anderen Endstellung für einen begrenzten Verdrehwinkel voneinander trennt.

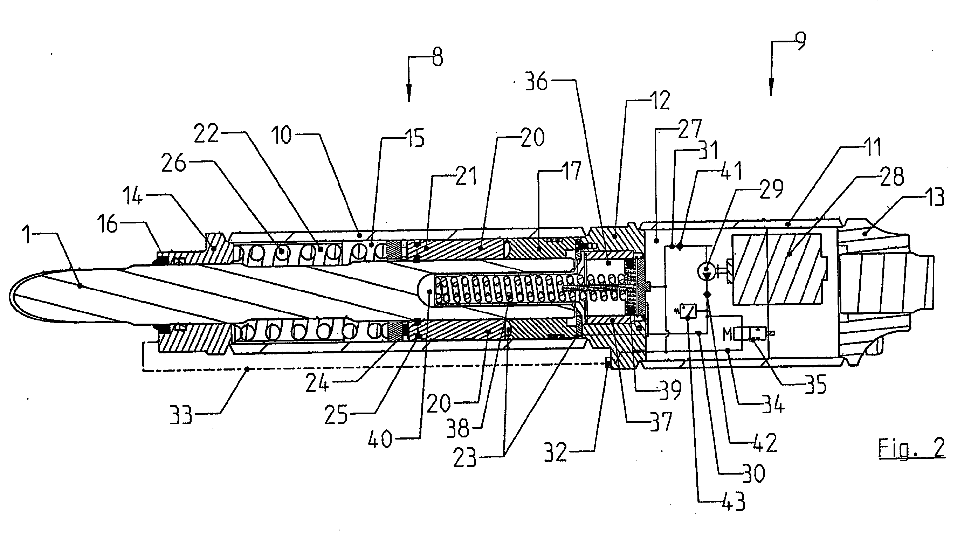

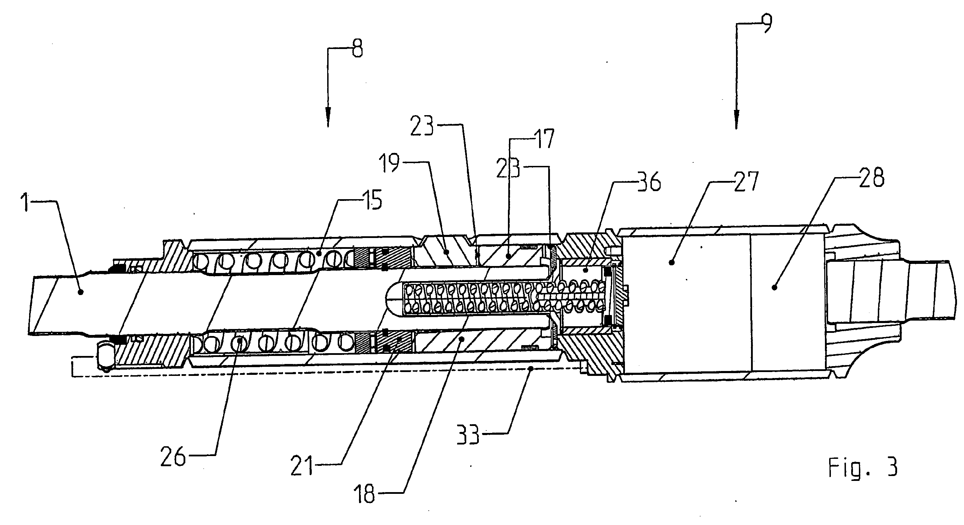

Wie es insbesondere aus den Fig. 2 und 3 ersichtlich ist, besitzt das Mechanikteil 8 der schaltbaren Kupplung 3 ein zylindrisches Gehäuse 10 und das Hydraulik- und Steuerteil 9 ein zylindrisches Gehäuse 11, die beide über einen Zwischenflansch 12 drehfest miteinander verbunden sind. Die so einteilig ausgeführten zylindrischen Gehäuse 10, 11 sind wiederum über einen Gehäuseflansch 13 drehfest mit dem zweiten Stabilisatorteil 2 verbunden. Auf der Seite des ersten Stabilisatorteils 1 ist das zylindrische Gehäuse 10 des Mechanikteils 8 mit einem Lagerflansch 14 ausgestattet, durch den das Ende des ersten Stabilisatorteils 1 bis in das Innere des Mechanikteils 8 hineingeführt ist. Dabei sind das erste Stabilisatorteil 1 und das zylindrische Gehäuse 10 radial so voneinander beabstandet, dass sich über die gesamte axiale Länge des zylindrischen Gehäuses 10 ein Ringraum 15 ergibt. Dieser Ringraum 15 ist im Bereich des Lagerflansches 14 über ein Dichtelement 16 nach außen hydraulisch abgedichtet.

Das erste Stabilisatorteil 1 trägt an seinem freien Ende ein Kraftübertragungsteil 17, das drehfest mit dem ersten Stabilisatorteil 1 verbunden ist, das gegenüber der Innenwand des zylindrischen Gehäuses 10 gleitend ausgeführt ist und das sich und das erste Stabilisatorteil 1 axial am Zwischenflansch 12 abstützt. Nach der Fig. 3 besitzt dieses Kraftübertragungsteil 17 ein sich axial erstreckendes Verzahnungselement 18 mit vorzugsweise konisch verlaufenden Zahnflanken. Im axialen Bereich dieses Verzahnungsteils 18 ist, wie es ebenfalls die Fig. 3 zeigt, im zylindrischen Gehäuse 10 ein dazu passendes Verzahnungselement 19 drehfest eingesetzt. Dabei bilden beide Venahnungselemente 18, 19 zwischen sich zwei gegenüberliegende Freiräume aus, in die zwei entsprechend angepasste Verriegelungselemente 20 eines axial verschiebbaren Verriegelungskolbens 21 eingreifen. Dazu ist dieser Verriegelungskolben 21 gegenüber dem ersten Stabilisatorteil 1 und gegenüber der Innenwand des zylindrischen Gehäuses 10 gleitend und axial und so begrenzt ausgeführt, dass sich im Ringraum 14 einerseits zwischen dem Verriegelungskolben 21 und dem Lagerflansch 14 ein Kupplungsfederraum 22 und andererseits zwischen dem Verriegelungskolben 21 und dem Zwischenflansch 12 ein Kupplungsdruckraum 23 ausbilden. Zur hydraulischen Trennung vom Kupplungsdruckraum 23 und vom Kupplungsfederraum 22 besitzt der Verrieglungskoben 21 gegenüber dem ersten Stabilisatorteil 1 ein inneres Dichtelement 24 und gegenüber dem zylindrischen Gehäuse 10 ein äußeren Dichtelement 25. In den Kupplungsfederraum 22 ist eine Kupplungsdruckfeder 26 eingesetzt, die sich am Lagerflansch 14 abstützt und den Verriegelungskolben 21 in Richtung des Kraftübertragungsteils 18 belastet. In der entgegen gesetzten Richtung wird der Verriegelungskolben 21 von der Kraft eines hydraulischen Drucks im Kupplungsdruckraum 23 belastet. Beide Verzahnungselemente 18, 19 des Kraftübertragungsteils 17 und des zylindrischen Gehäuses 10 sowie die beiden Verriegelungselemente 20 des Verriegelungskolbens 21 sind nun so aufeinander abgestimmt, dass sie unter der Kraft der Kupplungsdruckfeder 26 einkuppeln und eine spielfreie Verbindung zwischen dem ersten Stabilisatorteil 1 und dem zylindrischen Gehäuse 10 herstellen und unter der Belastung des hydraulischen Druckes im Kupplungsdruckraum 23 über einen begrenzten axialen Weg auskuppeln und so einen begrenzten Verdrehwinkel zwischen dem ersten Stabilisatorteil 1 und dem zylindrischen Gehäuse 10 freigeben.

Der Hydraulik- und Steuerteil 9 besteht im Wesentlichen aus einem hydraulischen Ventilblock 27, der innerhalb des zylindrischen Gehäuses 11 in räumlicher Nähe zum Mechanikteil 8 angeordnet ist und der mit entsprechenden Hydraulikelementen verkettet ist. Diese Hydraulikelemente bilden einen geschlossenen Hydraulikkreislauf zum Antrieb des Mechanikteils 8 der schaltbaren Kupplung 3 aus.

So gehört zu diesem Hydraulikkreislauf ein elektrischer Motor 28, der mit einer Pumpe 29 gekoppelt ist. Diese Pumpe 29 hat über eine durch den Zwischenflansch 12 hindurch geführte Druckleitung 30 Verbindung zum Kupplungsdruckraum 23 der hydraulischen Kupplung 3 und über eine Saugleitung 31, einen Sauganschluss 32, einer außen liegenden Saugrohrleitung 33 Verbindung zum Kupplungsfederraum 22 der schaltbaren Kupplung 3. Dazu sind die Druckleitung 30 und die Saugleitung 31 durch eine Überbrückungsleitung 34 verbunden, in der ein elektromagnetisch schaltbares 2/2-Wegeventil 35 angeordnet ist. Die Saugleitung 30 ist weiterhin mit einem Druckspeicher 36 verbunden, der aus einem Speicherzylinder 37 und einem von einer Speicherdruckfeder 38 belasteten Speicherkolben 39 gebildet wird. Räumlich ist der Speicherzylinder 37 und der Speicherkolben 39 im Zwischenflansch 12 angeordnet, während sich die Speicherdruckfeder 38 in einen axial verlaufenden Speicherfederraum 40 erstreckt. Dieser Speicherfederraum 40 ist im ersten Stabilisatorteil 1 eingearbeitet. In der Saugleitung 31 befindet sich ein nicht entsperrbares, in Richtung zur Pumpe 29 öffnendes Rückschlagventil 41, während in der Druckleitung 30 ein nicht entsperrbares, in Richtung zur Pumpe 29 schließendes Rückschlagventil 42 angeordnet ist. Weiterhin hat die Druckleitung 30 Verbindung zu einem elektrischen Druckschalter 43.

Das Hydraulik- und Steuerteil 9 besitzt weiterhin, wie es die Fig. 1 zeigt, am Zwischenflansch 12 einen hydraulischen Befüllungsanschluss 44 und am Gehäuseflansch 13 zwei Elektroanschlüsse 45 und 46 für das 2/2-Wegeventil 35 und den elektrischen Motor 28.

Zur Herstellung der Betriebsbereitschaft wird über den Befüllungsanschluss 44 die gesamte Hydraulikanlage einschließlich des Kupplungsfederraums 22, des Kupplungsdruckraums 23 und des Druckspeichers 36 mit einer ausreichenden Druckölmenge befüllt, sodass ein für die Betätigung der schaltbaren Kupplung 3 ausreichender Druck vorhanden ist.

Bei normalen Fahrbahnverhältnissen ist der elektrische Motor 28 ausgeschalten und das 2/2-Wegeventil 35 stromlos gehalten. Damit nimmt das 2/2-Wegeventil 35 seine offene Durchgangsstellung ein, sodass die Druckleitung 30 und die Saugleitung 31 über die Überbrückungsleitung 34 und über das 2/2-Wegeventil 35 miteinander in Verbindung stehen. Die Druckleitung 30 und die Saugleitung 31 weisen demnach einen gleichen Druck auf, der sich auf den Kupplungsdruckraum 23 und den Kupplungsfederraum 22 fortpflanzt und den Verriegelungskolben 21 beidseitig mit dem gleichen Druck belastet. Wegen der gleich großen Flächen heben sich die hydraulischen Kräfte am Verriegelungskolben 21 auf und so verschiebt die Kraft der Kupplungsdruckfeder 26 den Verriegelungskolben 21 in Richtung des Kraftübertragungsteils 17. Dabei gelangen die konischen Verriegelungselemente 20 zwischen das Verzahnungselement 18 des ersten Stabilisatorteils 1 und das Verzahnungselement 19 des zylindrischen Gehäuses 10, bis sich die Verriegelungselemente 20 und die Verzahnungselemente 18, 19 mit ihren seitlichen Konusflächen spielfrei aneinanderlegen. In diesem Zustand ist die schaltbare Kupplung 3 verriegelt und beide so verbundenen Stabilisatorteile 1 und 2 wirken wie ein einteiliger Stabilisator. Dabei ist die Kraft der Kupplungsdruckfeder 26 und die Konusflächen der Verzahnungselemente 18, 19 und der Verriegelungselemente 20 so aufeinander abgestimmt, dass die Kraft der Kupplungsdruckfeder 26 gegenüber den axial wirkenden Verdrehkräften der schaltbaren Kupplung 3 überwiegt und den geschlossenen Zustand der schaltbaren Kupplung 3 über die gesamte Belastungsbreite geschlossen hält.

Bei abnormalen Fahrbahnverhältnissen, wie sie beispielsweise im Gelände auftreten, reicht die Federrate der miteinander gekuppelten Stabilisatorteile 1 und 2 nicht mehr aus, um die Wankbewegungen der Räder auszugleichen. Um einen größeren Verdrehwinkel beider Stabilisatorteile 1, 2 zu erhalten, wird ein zentrales Steuersignal ausgelöst, das das 2/2-Wegeventil 35 und den elektrischen Motor 28 bestromt. Dadurch verstellt sich das 2/2-Wegeventil 35 in seine gesperrte Stellung, während der elektrische Motor 28 anläuft und die Pumpe 29 antreibt. Die Pumpe 29 saugt dabei über die interne Saugleitung 31 und der externen Saugrohrleitung 33 Drucköl aus dem Kupplungsfederraum 22 an und befördert es über die interne Druckleitung 30 in den Kupplungsdruckraum 23. Damit stellt sich im Kupplungsdruckraum 23 ein gegenüber dem Druck im Kupplungsfederraum 22 höherer Druck ein. Der Differenzdruck wirkt auf den Verriegelungskolben 21 und erzeugt eine Kraft, die der Kraft der Kupplungsdruckfeder 26 entgegen wirkt und die den Verriegelungskolben 21 in Richtung des Lagerflansches 14 bis in eine Endstellung verschiebt. Dadurch wird die Verriegelung der schaltbaren Kupplung 3 aufgegeben, wobei die freien Enden der Verzahnungselemente 18, 19 einerseits und der Verriegelungselemente 20 andererseits in einer axialen Überdeckung bleiben. Auf Grund der Konizität der seitlichen Konusflächen ergibt sich aber einer vorbestimmter radialer Verschwenkwinkel zwischen den Verzahnungselementen 18, 19 und den Verriegelungselementen 20. In dieser Endstellung des Verriegelungskolbens 21 stellt sich ein vorbestimmter Druck im Kupplungsdruckraum 23 ein, der sich über die interne Druckleitung 30 fortpflanzt und den Druckschalter 43 betätigt. Mit diesem Steuersignal wird der elektrische Motor 28 abgeschaltet, wobei die Druckverhältnisse in der Druckleitung 30 und damit im Kupplungsdruckraum 23 sowie in der Saugleitung 31 und damit im Kupplungsfederraum 22 unverändert bleiben. Damit wird die geöffnete Stellung der schaltbaren Kupplung 3 aufrechterhalten.

Mit der Verbesserung der Fahrbahnverhältnisse wird wieder ein zentrales Steuersignal auf das Hydraulik- und Steuerteil 9 gegeben, infolgedessen die Bestromung des 2/2-Wegeventil 35 aufgegeben wird. Dadurch verschiebt sich das 2/2-Wegeventil 35 wieder in seine geöffnete Stellung, sodass die Druckleitung 30 und die Saugleitung 31 wieder verbunden und ein Druckausgleich am Verriegelungskolben 21 hergestellt wird. Der Verriegelungskolben verschiebt sich auf Grund der Kraft der Kupplungsdruckfeder 26 und verriegelt die schaltbare Kupplung.

Mögliche Volumenveränderungen, die beispielsweise durch Temperaturschwankungen oder durch Leckverluste auftreten können, werden durch den von der Speicherdruckfeder 38 belasteten Druckspeicher 36 ausgeglichen.

Eine Havarie im elektrischen Steuerteil des Hydraulik- und Steuerteils 9 bewirkt, dass das 2/2-Wegeventil 35 stets die Durchgangsstellung einnimmt, sodass zumindest der verriegelte Funktionsbereich der schaltbaren Kupplung 3 aufrechterhalten bleibt.

### Bezugszeichenliste

- 1: erster Stabilisatorteil
- 2: zweiter Stabilisatorteil
- 3: schaltbare Kupplung
- 4: Stabilisatorlager
- 5: Stabilisatorlager
- 6: Pendelstütze
- 7: Pendelstütze
- 8: Mechanikteil
- 9: Hydraulik- und Steuerteil
- 10: zylindrisches Gehäuse
- 11: zylindrisches Gehäuse
- 12: Zwischenflansch
- 13: Gehäuseflansch
- 14: Lagerflansch
- 15: Ringraum
- 16: Dichtelement
- 17: Kraftübertragungsteil
- 18: Verzahnungselement des Stabilisatorteils
- 19: Verzahnungselement des zylindrischen Gehäuses
- 20: Verriegelungselement
- 21: Vernegelungskolben
- 22: Kupplungsfederraum
- 23: Kupplungsdruckraum
- 24: inneres Dichtelement
- 25: äußeres Dichtelement
- 26: Kupplungsdruckfeder
- 27: Ventilblock
- 28: elektrischer Motor
- 29: Pumpe
- 30: Druckleitung
- 31: Saugleitung
- 32: Sauganschluss
- 33: Saugrohrleitung
- 34: Überbrückungsleitung
- 35: 2/2-Wegeventil
- 36: Druckspeicher
- 37: Speicherzylinder
- 38: Speicherdruckfeder
- 39: Speicherkolben
- 40: Speicherfederraum
- 41: nichtentsperrbares Rückschlagventil
- 42: nichtentsperrbares Rückschlagventil
- 43: Druckschalter
- 44: Befällungsanschluss
- 45: Elektroanschluss
- 46: Elektroanschluss

## Patentansprüche

1. Schaltbarer Stabilisator für ein Kraftfahrzeug, bestehend aus einem ersten Stabilisatorteil (1) und einem zweiten Stabilisatorteil (2), die beide über eine schaltbare Kupplung (3) miteinander verbunden sind, wobei die schaltbare Kupplung (3) als eine einfach wirkende Kolben-Zylindereinheit ausgeführt und mit einem Hydraulik- und Steuerteil (9) verbunden ist, **dadurch gekennzeichnet, dass** die Hydraulikanlage des Hydraulik- und Steuerteils (9) mit der Kolbenzylindereinheit der schaltbaren Kupplungseinheit (3) einen geschlossenen Kreislauf bildet, wobei das Hydraulik- und Steuerteil (9) in das zylindrische Gehäuse (10) der schaltbaren Kupplung (3) integriert ist.

2. Schaltbarer Stabilisator nach Anspruch 1, **dadurch gekennzeichnet, dass** das Hydraulik- und Steuerteil (9) über eine Druckleitung (30) mit dem Kupplungsdruckraum (23) der schaltbaren Kupplung (3) und über eine Saugrohrleitung (33) mit dem Kupplungsfederraum (22) der schaltbaren Kupplung (3) verbunden ist, die Druckleitung (31) mit einem elektrischen Druckschalter (43) und die Saugleitung (31) mit einem Druckspeicher (36) verbunden sind und die Druckleitung (30) und die Saugleitung (31) über eine Überbrückungsleitung (34) in Verbindung stehen, wobei in der Überbrückungsleitung (34) ein elektromagnetisch schaltbares 2/2-Wegeventil (35) angeordnet ist, das in der bestromten Stellung geschlossen und in der nichtbestromten Stellung offen ausgeführt ist.

3. Schaltbarer Stabilisator nach Anspruch 2, **dadurch gekennzeichnet, dass** das Hydraulik- und Steuerteil (9) koaxial zur schaltbaren Kupplung (3) ausgerichtet ist und aus einem zylindrischen Gehäuse (11) und einem im zylindrischen Gehäuse (11) angeordneten Ventilblock (27) besteht, wobei das zylindrische Gehäuse (11) des Hydraulik- und Steuerteils (9) mit dem zylindrischen Gehäuse (10) der schaltbaren Kupplung (3) drehfest verbunden und der Ventilblock (27) mit allen erforderlichen Hydraulikelementen verkettet ist.

4. Schaltbarer Stabilisator nach Anspruch 3, **dadurch gekennzeichnet, dass** zur drehfesten Verbindung der beiden zylindrischen Gehäuse (10, 11) ein Zwischenflansch (12) eingesetzt ist.

5. Schaltbarer Stabilisator nach Anspruch 4, **dadurch gekennzeichnet, dass** das Hydraulik- und Steuerteil (9) über eine interne Druckleitung (30) mit dem Kupplungsdruckraum (23) der schaltbaren Kupplung (3) und über eine externe Saugrohrleitung (33) mit dem Kupplungsfederraum (22) der schaltbaren Kupplung (3) verbunden ist, die Druckleitung (31) mit einem elektrischen Druckschalter (43) und die Saugleitung (31) mit einem Druckspeicher (36) verbunden sind und die Druckleitung (30) und die Saugleitung (31) über eine Überbrückungsleitung (34) in Verbindung stehen, wobei in der Überbrückungsleitung (34) ein elektromagnetisch schaltbares 2/2-Wegeventil (35) angeordnet ist, das in der bestromten Stellung geschlossen und in der nichtbestromten Stellung offen ausgeführt ist.

6. Schaltbarer Stabilisator nach Anspruch 5, **dadurch gekennzeichnet, dass** der Druckspeicher (36) als eine einfach wirkende Kolben-Zylindereinheit mit einem Speicherzylinder (37), einem Speicherkolben (39) und einer den Speicherkolben (39) belastenden Speicherdruckfeder (38) ausgeführt ist und der Speicherzylinder (37) und der Speicherkolben (39) im Zwischenflansch (12) und die Speicherdruckfeder (38) mit ihrem Speicherfederraum (40) im ersten Stabilisatorteil (1) angeordnet sind.

## Claims

1. Switchable stabiliser for a motor vehicle, consisting of a first stabiliser part (1) and a second stabiliser part (2), the two being connected together via a switchable coupling (3), wherein the switchable coupling (3) is constructed as a single-acting piston-cylinder unit and is connected to a hydraulic and control part (9), **characterised in that** the hydraulic system of the hydraulic and control part (9) forms with the piston-cylinder unit of the switchable coupling unit (3) a closed circuit, wherein the hydraulic and control part (9) is integrated into the cylindrical housing (10) of the switchable coupling (3).

2. Switchable stabiliser according to Claim 1, **characterised in that** the hydraulic and control part (9) is connected via a pressure line (30) to the coupling pressure chamber (23) of the switchable coupling (3) and via a suction pipeline (33) to the coupling spring chamber (22) of the switchable coupling (3), the pressure line (31) is connected to an electrical pressure switch (43) and the suction line (31) is connected to a pressure accumulator (36) and the pressure line (30) and the suction line (31) are connected via a bypass line (34), wherein an electromagnetically switchable 2/2-way valve (35) is disposed in the bypass line (34), which valve is constructed so as to be closed in the energised position and open in the unenergised position.

3. Switchable stabiliser according to Claim 2, **characterised in that** the hydraulic and control part (9) is oriented coaxially with the switchable coupling (3) and consists of a cylindrical housing (11) and a valve block (27) disposed in the cylindrical housing (11), wherein the cylindrical housing (11) of the hydraulic and control part (9) is connected to the cylindrical housing (10) of the switchable coupling (3) in a rotationally rigid manner and the valve block (27) is interlinked with all the required hydraulic elements.

4. Switchable stabiliser according to Claim 3, **characterised in that** an intermediate flange (12) is used for the rotationally rigid connection of the two cylindrical housings (10, 11).

5. Switchable stabiliser according to Claim 4, **characterised in that** the hydraulic and control part (9) is connected via an internal pressure line (30) to the coupling pressure chamber (23) of the switchable coupling (3) and via an external suction pipeline (33) to the coupling spring chamber (22) of the switchable coupling (3), the pressure line (31) is connected to an electrical pressure switch (43) and the suction line (31) is connected to a pressure accumulator (36) and the pressure line (30) and the suction line (31) are connected via a bypass line (34), wherein an electromagnetically switchable 2/2-way valve (35) is disposed in the bypass line (34), which valve is constructed so as to be closed in the energised position and open in the unenergised position.

6. Switchable stabiliser according to Claim 5, **characterised in that** the pressure accumulator (36) is constructed as a single-acting piston-cylinder unit with an accumulator cylinder (37), an accumulator piston (39) and an accumulator pressure spring (38) which loads the accumulator piston (39) and the accumulator cylinder (37) and the accumulator piston (39) are disposed in the intermediate flange (12) and the accumulator pressure spring (38) with its accumulator spring chamber (40) is disposed in the first stabiliser part (1).

## Revendications

1. Stabilisateur commutable pour un véhicule automobile, constitué d'une première partie de stabilisateur (1) et d'une seconde partie de stabilisateur (2), qui sont toutes deux raccordées l'une à l'autre via un organe de couplage commutable (3), dans lequel l'organe de couplage commutable (3) se présente sous la forme d'une unité de piston-cylindre fonctionnant de manière simple et est raccordé à une partie hydraulique de commande (9), **caractérisé en ce que** l'installation hydraulique de la partie hydraulique de commande (9) forme, conjointement avec l'unité de piston-cylindre de l'unité de couplage commutable (3), un circuit fermé dont la partie hydraulique de commande (9) est intégrée au boîtier cylindrique (10) de l'organe de couplage commutable (3).

2. Stabilisateur commutable selon la revendication 1, **caractérisé en ce que** la partie hydraulique de commande (9) est raccordée via une conduite de pression (30) à l'espace sous pression (23) de l'organe de couplage commutable (3) et via une conduite tubulaire d'aspiration (33) à l'espace à ressort (22) de l'organe de couplage commutable (3), la conduite de pression (31) est raccordée à un interrupteur à pression électrique (43) et la conduite d'aspiration (30) à un accumulateur de pression (36), et la conduite de pression (30) et la conduite d'aspiration (31) sont raccordées l'une à l'autre via une conduite de pontage (34), dans lequel un distributeur à 2/2 voies (35) à commutation électromagnétique est agencé dans la conduite de pontage (34), distributeur qui est fermé en position d'alimentation et qui est ouvert en position sans alimentation.

3. Stabilisateur commutable selon la revendication 2, **caractérisé en ce que** la partie hydraulique de commande (9) est alignée coaxialement avec l'organe de couplage commutable (3) et est constituée d'un boîtier cylindrique (11) et d'un bloc de distribution (27) agencé dans le boîtier cylindrique (11), dans lequel le boîtier cylindrique (11) de la partie hydraulique de commande (9) est raccordé de manière solidaire en rotation avec le boîtier cylindrique (10) de l'organe de couplage commutable (3) et le bloc de distribution (27) est relié à tous les éléments hydrauliques requis.

4. Stabilisateur commutable selon la revendication 3, **caractérisé en ce que,** pour raccorder de manière solidaire en rotation les deux boîtiers cylindriques (10, 11), on utilise une bride intermédiaire (12).

5. Stabilisateur commutable selon la revendication 4, **caractérisé en ce que** la partie hydraulique de commande (9) est raccordée via une conduite de pression interne (30) à l'espace sous pression (23) de l'organe de couplage commutable (3) et via une conduite tubulaire d'aspiration externe (33) à l'espace à ressort (22) de l'embrayage commutable (3), la conduite de pression (30) est raccordée à un interrupteur à pression électrique (43) et la conduite d'aspiration (31) à un accumulateur de pression (36), et la conduite de pression (30) et la conduite d'aspiration (31) sont raccordées l'une à l'autre via une conduite de pontage (34), dans lequel un distributeur 2/2 voies (35) à commutation électromagnétique est agencé dans la conduite de pontage (34), distributeur qui est fermé en position d'alimentation et qui est ouvert en position sans alimentation.

6. Stabilisateur commutable selon la revendication 5, **caractérisé en ce que** l'accumulateur de pression (36) se présente sous la forme d'une unité de piston-cylindre fonctionnant de manière simple avec un cylindre d'accumulateur (37), un piston d'accumulateur (39) et un ressort de compression d'accumulateur (38) sollicitant le piston d'accumulateur (39), et le cylindre d'accumulateur (37) et le piston d'accumulateur (39) sont agencés dans la bride intermédiaire (12) et le ressort de compression d'accumulateur (38) avec son espace à ressort d'accumulateur (40) est agencé dans la première partie (1) du stabilisateur.
